# EUROPEAN PATENT SPECIFICATION

(11) **EP 4 565 544 B1**
(45) Date of publication and mention of the grant of the patent: **25.03.2026**
(21) Application number: 24702777.4
(22) Date of filing: 30.01.2024
(51) Int. Cl.: C04B 33/13, C04B 33/24, C04B 33/32, C04B 33/34

(54) **TILES OR SLABS OF COMPACTED CERAMIC MATERIAL**
FLIESEN ODER PLATTEN AUS VERDICHTETEM KERAMISCHEM MATERIAL
CARREAUX OU DALLES EN MATÉRIAU CÉRAMIQUE COMPACTÉ

(30) Priority: 31.01.2023 EP 23382079
(43) Date of publication of application: 11.06.2025
(73) Proprietor: Cosentino Research & Development, S.L., 04850 Cantoria, Almería (ES)
(72) Inventor: ÁLVAREZ DE DIEGO, Javier, 04850 Cantoria, Almería (ES); FERNÁNDEZ MÁRQUEZ, Manuel, 04850 Cantoria, Almería (ES); RUEDA BELMONTE, Francisco José, 04850 Cantoria, Almería (ES); BENITO LÓPEZ, José Manuel, 04850 Cantoria, Almería (ES)
(74) Representative: ABG Intellectual Property Law, S.L.
(86) International application number: PCT/EP2024/052258
(87) International publication number: WO 2024/160835

(56) References cited:
- CN-A- 113 800 880
- CN-A- 115 010 465
- RAMBALDI E. ET AL: "Cutting behaviour of porcelain stoneware slabs: A microstructural evaluation", vol. 48, no. 19, 1 October 2022 (2022-10-01), NL, pages 28766 - 28773, XP093064858, ISSN: 0272-8842, Retrieved from the Internet <URL:https://pdf.sciencedirectassets.com/271590/1-s2.0-S0272884222X00175/1-s2.0-S0272884221039195/main.pdf?X-Amz-Security-Token=IQoJb3JpZ2luX2VjEOz//////////wEaCXVzLWVhc3QtMSJHMEUCIQC7awFrxB0k51x2jOtqncBLmTtme83R1gVrbegAraUEagIgYzIA32TLrEwlnNgeebcb7ea++FiF3bfcP9k3LAMweboqswUIdBAFGgwwNTkwMDM1NDY4NjUiDBy1a> DOI: 10.1016/j.ceramint.2021.12.138

## Description

### Field of the Invention

The invention relates to compositions and properties of large format tiles or slabs, comprising a ceramic material, such as a highly compacted ceramic material with whitish or cream color. These tiles or slabs can be used for construction and decoration applications. The invention is also concerned with a method of manufacture of the tiles or slabs.

### Background of the Invention

There is currently an ongoing trend in the market of the ceramic tiles towards tiles or slabs of large dimensions (or large format) having extremely reduced open porosity and water absorption, together with outstanding mechanical and chemical/UV resistance.

Many of these large format tiles or slabs comprise a highly compacted vitrified porcelain ceramic layer, frequently incorporating additional layers or deposits for decoration, protection or texturization, applied to one or both major surfaces of the ceramic layer. The tiles or slabs are normally considered to have large format when they exceed for example 1.2 m x 0.6 m, and they can reach up to 3.2 x 1.6 m or more, in a variety of thicknesses from 3 mm to 30 mm.

The large sized tiles or slabs, which can be provided with very rich surface and body decorations, are finding increased use in applications where large format slabs of natural or artificial stones were previously employed, such as kitchen or vanity countertops, kitchen splashbacks, wall siding, furniture cladding, tabletops, ventilated façade tiles, stovetops, fireplaces, among others. For most of these applications, the large sized tiles or slabs, frequently of 12 - 30 mm thickness, need to be cut-to-size, to make them fit to the intended use (e.g. as kitchen countertop, façade tile or as tabletop).

Compositions and processes for the manufacture of the referred large format tiles or slabs are known, with multiple manufacturers currently commercializing those products and the machinery for their production at industrial scale.

The ceramic layers used for the mentioned large format tiles or slabs are usually manufactured with different formulations resulting in different colorimetry, to address the demand for tiles having different chromatic effects, both in their exposed surfaces and through the tile thickness. For example, some ceramic layers are manufactured with a very high whiteness/lightness, such with a CIELAB L* coordinate higher than 85. Large format ceramic layers are manufactured also with whitish or cream hues, which normally have a CIELAB L* coordinate in the range 75-85.

EP 3459919 A1 relates to ceramic slabs with a surface of more than 1.5 m² and a CIELAB L* coordinate of more than 92.

Siligardi et al. (Ceramics International 37 (2011) 1851-1858) disclose results concerning the effects of the addition of different glass ceramic frits belonging to the CaO-ZrO2-Al₂O₃-SiO₂ system containing different amounts of alumina to porcelain stoneware bodies. The porcelain stoneware bodies have CIELAB L* coordinates of 87-88.

WO2016193500 discloses compacted ceramic materials, including slabs of 3.2 x 1.44 m² surface and 0.7-3 cm, with low porosity, obtained by firing certain mixtures of clays and feldspar to a maximum temperature of 1.000 - 1.200 °C.

CN104926281A is concerned with a method for the preparation of low-cost ultra-white porcelain bricks or tiles. The bricks or tiles disclosed have residual open porosity leading to water absorption higher than 0.13%.

When manufactured with the desired whiteness/lightness, high mechanical resistance, high density, and low porosity (low water absorption), the tiles based on those ceramic layers have a significant drawback that they can be difficult to cut, even for skilled stonemasons using specialized tools, more remarkably if the ceramic layer thickness in the slab or tile is ≥ 12 mm. Therefore, there is still a need for further ceramic materials with whitish or cream hues (e.g. CIELAB L* coordinate = 75-85) which have high mechanical resistance, high density, and low porosity (low water absorption) and which can be more easily or efficiently cut.

International application PCT/EP2022/071322, from the same applicant, relates to large format ceramic material tiles or slabs that can be very efficiently cut. The materials disclosed therein are highly white ceramic materials with a CIELAB L* coordinate > 85, such as 87-89.

### Summary of the Invention

The inventors have surprisingly found that titles or slabs comprising a fired ceramic material with a chemical composition comprising a combination of oxides as defined herein present the desired whitish or cream color (e.g. CIELAB L* coordinate = 75-85) and relevant advantages when compared with similar tiles or slabs in the art, advantages which are of particular importance when considering the manufacture and handling of pieces of large dimensions.

Remarkably, the improved tiles or slabs according to the invention can be more efficiently cut with available tools. By this it is meant that the tiles or slabs of the invention can either be cut at a faster speed without defects and without damaging the cutting disk or tools, and/or that more tiles or slabs can be cut with the same disk without having to sharpen or replace it.

Simultaneously, it has been found that the ceramic material has a significantly reduced density, thus reducing the weight of the slab or tile.

Additionally, it has also been found that the shrinkage of the ceramic material during firing is reduced when compared with other ceramic compositions. Consequently, more surface of the tile or slab is obtained per compacting/firing cycle.

Importantly, these advantages are achieved without compromising or deteriorating the other desirable properties of the slabs or tiles comprising ceramic materials, such as low or negligible water absorption or high mechanical resistance.

Thus, in a first aspect, the disclosure is directed to a tile or slab comprising a fired ceramic material, wherein the fired ceramic material has a length of at least 1.2 m and a width of at least 0.6 m and a chemical composition comprising a combination of oxides according to:

| | |
|---|---|
| SiO₂ | 59.0-70.0 wt% |
| Al₂O₃ | 19.0-25.0 wt% |
| CaO | 1.7-5.8 wt% |
| MgO | 1.2-5.6 wt% |
| ZrO₂ | 0.0-1.9 wt% |
| Fe₂O₃ | 0.0-1.0 wt% |

based on the total weight of the fired ceramic material;
wherein the fired ceramic material comprises 45-75 wt% of glassy phase, 5-20 wt% of anorthite, 5-17 wt% of albite, 0-10 wt% of mullite, 0-2 wt% of zircon and 1-9 wt% of quartz, based on the weight of the fired ceramic material.

In a second aspect, the disclosure is concerned with the use of a tile or slab according to the first aspect for the manufacture of a kitchen or vanity countertop, kitchen splashback, shower tray, wall or floor covering, furniture cladding, tabletop, ventilated façade tile, stovetop, stair step, or fireplace.

In a third aspect, the disclosure is directed to a kitchen or vanity countertop, kitchen splashback, shower tray, wall or floor covering, furniture cladding, tabletop, ventilated façade tile, stovetop, stair step or fireplace made from a title or slab according to the first aspect.

In a fourth aspect, the disclosure is directed to a method for the manufacture of a tile or slab according to the first aspect, wherein the method comprises:
a) preparing discrete agglomerates of ceramic raw materials;
b) shaping and compacting the agglomerates to provide a shaped and compacted material with a length of at least 1.2 m and a width of at least 0.6 m;
c) firing the shaped and compacted material with a temperature profile having a maximum between 1,100°C and 1,190°C;
wherein the ceramic raw materials of step a) comprise:
(i) 25-45 wt% of clay materials, and
(ii) 55-75 wt% of non-clay materials,
based on the total weight of said ceramic raw materials;
and wherein the non-clay materials (ii) comprise:
- 50-65 wt% of alkali feldspar,
- 2-10 wt% of a calcium silicate material comprising 9-50 wt% of CaO,
- 3-9 wt% of a magnesium containing material comprising 28-31.7 wt% of MgO,
- 0-1.5 wt% of a zirconium containing material comprising 45-100 wt% of ZrO₂; based on the total weight of the ceramic raw materials in a).

In a fifth aspect, the disclosure is directed to a tile or slab obtainable by the method of the fourth aspect.

Further aspects of the disclosure are directed to the use of a tile or slab according to the fifth aspect for the manufacture of a kitchen or vanity countertop, kitchen splashback, shower tray, wall or floor covering, furniture cladding, tabletop, ventilated façade tile, stovetop, stair step, or fireplace; and to a kitchen or vanity countertop, kitchen splashback, shower tray, wall or floor covering, furniture cladding, tabletop, ventilated façade tile, stovetop, stair step or fireplace made from a title or slab according to the fifth aspect.

### Detailed Description of the Invention

The term "ceramic material" or "fired ceramic material" as used herein refers to a material consisting of inorganic, polycrystalline, non-metallic compounds, the fundamental characteristic of which is that they are consolidated in solid state by means of high-temperature heat treatments (firing) and are formed by a combination of crystalline and glassy phases. The inorganic compounds are formed by metallic and non-metallic chemical elements bound by ionic or covalent bonds.

The (fired) ceramic material according to the present disclosure may be a compacted or ultra-compacted ceramic material. That is, a ceramic material that has been compacted at a pressure of at least 250 kg/cm², for example at least 300 kg/cm², such as 250-600 kg/cm², or 300-600 kg/cm², or even 400-600 kg/cm².

The terms "tile" and "slab" as used herein are meant in general to refer to an essentially flat and uniform thickness article, such as of square or rectangular parallelepiped form, i.e. an article defining a length and a width, as well as a thickness of smaller dimension than the length and the width. These terms should be understood to include and be interchangeable with board, plate, plank, panel, sheet, block and the like. The terms "length", "width" and "thickness" are used herein as understood generally; e.g. "length" refers to the longest of the three dimensions of an object, "width" refers to the longest dimension of an object that is perpendicular to the length, and "thickness" refers to the remaining dimension that is perpendicular to the length and the width.

The composition of the fired ceramic material and of the raw materials might be obtained e.g. by X-ray fluorescence (XRF), a technique well-established in the mineral technological field. The composition indicated herein corresponds to the average, for example calculated from at least 3 repetitions of the measurement, of the composition of samples containing a mass of the ceramic material or the raw material (e.g. 1 gram of material).

The type and amount of crystalline phases in the (fired) ceramic material and in the raw materials can be determined e.g. by powder X-Ray Diffraction analysis (XRD) using the Rietveld method for quantification, a technique amply used in the field.

In the present disclosure, "glassy phase" or "vitrified phase" is understood to mean the amorphous, non-crystalline phase (i.e. without long range atomic order), and/or the phase with non-coherent x-ray diffraction, embedding the crystalline phases. The glassy or vitrified phase can be quantified e.g. by XRD.

The skilled person readily understands that, when a composition or material is defined by the weight percentage values of all the components it comprises, these values can never sum up to a value which is greater than 100%. The amount of all components that said material or composition comprises adds up to 100% of the weight of the composition or material.

When the amount of a component of a composition, mixture or material is given by a range with a lower limit of 0 wt% or 0.0 wt%, this means that said composition, mixture or material may not comprise said component or comprise it in an amount not higher than the specified upper limit of the range.

In the present disclosure, the described percentages refer to w/w percentage (wt%) unless otherwise stated.

When a range is indicated in the present document, both lower and upper limits are included in said range.

The term "comprises" encompasses the terms "consisting essentially of" and "consisting of". Thus, at each occurrence in the present document, the term "comprising" may be replaced with the term "consisting essentially of" or "consisting of".

The expressions "obtainable", "obtained" and equivalent expressions are used herein interchangeably, and in any case, the expression "obtainable" encompasses the expression "obtained".

As used herein, the singular forms "a" "an" and "the" include plural reference unless the context clearly dictates otherwise.

Unless specifically stated otherwise, or unless they are clearly incompatible, all the embodiments disclosed in relation to an aspect of the disclosure are also applicable to the other aspects. It should be understood that the scope of the present disclosure includes all the possible combinations of embodiments disclosed herein, either belonging to the same aspect or to different aspects of the disclosure.

In a first aspect, the disclosure is directed to a tile or slab comprising a fired ceramic material that has a length of at least 1.2 m and a width of at least 0.6 m, wherein the fired ceramic material has a chemical composition comprising a combination of oxides according to:

| | |
|---|---|
| SiO₂ | 59.0-70.0 wt% |
| Al₂O₃ | 19.0-25.0 wt% |
| CaO | 1.7-5.8 wt% |
| MgO | 1.2-5.6 wt% |
| ZrO₂ | 0.0-1.9 wt% |
| Fe₂O₃ | 0.0-1.0 wt% |

based on the total weight of the fired ceramic material,
wherein the fired ceramic material comprises 45-75 wt% of glassy phase, 5-20 wt% of anorthite, 5-17 wt% of albite, 0-10 wt% of mullite, 0-2 wt% of zircon and 1-9 wt% of quartz, based on the weight of the fired ceramic material.

Fired ceramic materials according to the disclosure may have a whitish or cream color. In a particular embodiment, the fired ceramic material has a CIELAB L* coordinate of 75-85. In a further embodiment, it has an L* coordinate of 79-85.

The fired ceramic material may have a CIELAB b* coordinate of 6-12. In a further embodiment, it has a b* coordinate of 7-10.

The fired ceramic material may have a CIELAB a* coordinate of from -1 to 3. In a further embodiment, it has an a* coordinate of 0-2.

According to a particular embodiment, the fired ceramic material has an L* coordinate of 75-85, a b* coordinate of 6-12, and an a* coordinate of from -1 to 3. In a further embodiment, the fired ceramic material has an L* coordinate of 79-85, a b* coordinate of 7-10, and an a* coordinate of 0-2.

The terms "L*/a*/b* coordinate" or "CIELAB L*/a*/b* coordinate" are used herein interchangeably to refer to the colorimetry coordinates L*, a* or b* in the CIELAB color space. These coordinates can be determined according to ISO 10545-16:2010.

The SiO₂ content may be in the range 60.0-68.0 wt%. Further, the SiO₂ content may be in the range 61.0 - 67.0 wt%.

The Al₂O₃ content may be in the range 20.0-24.0 wt%. Further, the Al₂O₃ content may be in the range 21.0-23.0 wt%.

The embodiments herein may be additionally characterized by having a ratio of weight percentages of SiO₂/Al₂O₃ in the range 2.4-3.4, or 2.5-3.3.

The CaO content in the fired ceramic material might be in the range 2.0-5.0 wt%. Further, the CaO content in the fired ceramic material might be in the range 2.6-4.0 wt% or even 3.0-3.8 wt%.

The MgO content in the fired ceramic material may be in the range 1.2-3.8 wt%. Further, the MgO content in the fired ceramic material may be in the range 1.5-3.0 wt% or even 1.5-2.4 wt%.

Alternatively, or in addition to the previous embodiments, the fired ceramic material is characterized by having a composition where the sum of the weight percentages of CaO + MgO can be in the range 4.0-7.0 wt%, or in the range 4.5-6.5 wt%, based on the total weight of the fired ceramic material.

In certain embodiments, the fired ceramic material does not comprise ZrO₂. Alternatively, it may be comprised in the range from 0.0-1.5 wt%, or 0.0-1.0 wt%. In a particular embodiment, the fired ceramic material comprises ZrO₂ in the range 0.0-0.5 wt%.

The fired ceramic material may comprise Fe₂O₃ in the range 0.0-0.8 wt%, or 0.05-0.8 wt%. In a particular embodiment, the fired ceramic material comprises Fe₂O₃ in the range 0.0-0.6 wt% or 0.1-0.6 wt%.

The fired ceramic material can comprise other oxides, such as TiO₂, K₂O and/or Na₂O, such as in a total amount less than 13.0 wt%, or even less than 10.0 wt%, based on the total weight of the fired ceramic material.

**In** some embodiments, the fired ceramic material may further comprise TiO₂ in the range 0.0-1.0 wt%, or 0.05-1.0 wt%, based on the total weight of the fired ceramic material. In other embodiments, the fired ceramic material may comprise TiO₂ in the range 0.0-0.8 wt%, or 0.05-0.8 wt%. In further embodiments, the fired ceramic material may comprise TiO₂ in the range 0.0-0.6 wt%, or 0.05-0.6 wt%.

**In** addition to, or alternative to the embodiments herein, the sum of the amounts of Fe₂O₃ and TiO₂ in the fired ceramic material may be less than 2.0 wt%, or less than 1.5 wt%, based on the total weight of the fired ceramic material. The sum of the amounts of Fe₂O₃ + TiO₂ in the composition of the fired ceramic material may be 0.1-2.0 wt%, or 0.1-1.5 wt%.

The fired ceramic material of the different embodiments may also comprise K₂O and/or Na₂O in the composition. They may be in a total amount less than 11.0 wt%, or less than 9.0 wt%, based on the total weight of the fired ceramic material. In an embodiment, the sum of the amount of K₂O + Na₂O in the composition of the fired ceramic material may be in the range 2.5-11.0 wt%, or 3.0-9.0 wt%, based on the total weight of the fired ceramic material.

According to an embodiment, the sum of the amount of K₂O + Na₂O in the composition of the fired ceramic material is in the range 5.5-11.0 wt%, based on the total weight of the fired ceramic material.

**In** a further embodiment, the sum of the amount of K₂O + Na₂O in the composition of the fired ceramic material is in the range 6.0-9.0 wt%, based on the total weight of the fired ceramic material.

**In** particular embodiments, the fired ceramic material may comprise K₂O in the range 1.0-5.0 wt%, or 1.0-4.0 wt%, based on the total weight of the fired ceramic material. In a further embodiment, the fired ceramic material may comprise K₂O in the range 2.0-3.0 wt%.

According to a particular embodiment, the fired ceramic material comprises K₂O in the range 2.2-4.0 wt%, based on the total weight of the fired ceramic material.

**In** particular embodiments, the fired ceramic material may comprise Na₂O in the range 1.0-7.0 wt%, or 1.0-6.0 wt%, based on the total weight of the fired ceramic material. In a further embodiment, the fired ceramic material may comprise Na₂O in the range 2.0-6.0 wt%, or 3.5-6.0 wt%. In another embodiment, it may comprise 4.0-5.5 wt% of Na₂O.

According to a particular embodiment, the fired ceramic material comprises Na₂O in the range 3.5-4.0 wt%, based on the total weight of the fired ceramic material.

**In** further embodiments, the sum of the amount of SiO₂, Al₂O₃, CaO and MgO in the fired ceramic material represents at least 80.0 wt%, or at least 85.0 wt%, of the total weight of the fired ceramic material. In an embodiment, the sum of the amount of SiO₂, Al₂O₃, CaO and MgO represents at least 90.0 wt% of the total weight of the fired ceramic material.

Additionally, or alternatively, the sum of the amount of SiO₂, Al₂O₃, CaO, MgO, K₂O and Na₂O may represent at least 94.0 wt%, or at least 97.0 wt%, of the total weight of the fired ceramic material. In an embodiment, the sum of the amount of SiO₂, Al₂O₃, CaO, MgO, K₂O and Na₂O represents at least 98.0 wt% of the total weight of the fired ceramic material.

The fired ceramic material may have a chemical composition comprising a combination of oxides according to:

| | |
|---|---|
| SiO₂ | 59.0-70.0 wt% |
| Al₂O₃ | 19.0-25.0 wt% |
| CaO | 2.0-5.0 wt% |
| MgO | 1.2-3.8 wt% |
| ZrO₂ | 0.0-1.5 wt% |
| Fe₂O₃ | 0.0-0.8 wt% |
| Na₂O | 2.0-6.0 wt% |

based on the total weight of the fired ceramic material.

The fired ceramic material may have a chemical composition comprising a combination of oxides according to:

| | |
|---|---|
| SiO₂ | 59.0-70.0 wt% |
| Al₂O₃ | 19.0-25.0 wt% |
| CaO | 2.0-5.0 wt% |
| MgO | 1.2-3.8 wt% |
| ZrO₂ | 0.0-1.5 wt% |
| Fe₂O₃ | 0.0-0.8 wt% |
| Na₂O | 2.0-6.0 wt% |
| K₂O | 1.0-4.0 wt% |

based on the total weight of the fired ceramic material.

The fired ceramic material may have a chemical composition comprising a combination of oxides according to:

| | |
|---|---|
| SiO₂ | 60.0-68.0 wt% |
| Al₂O₃ | 20.0-24.0 wt% |
| CaO | 2.0-5.0 wt% |
| MgO | 1.2-3.8 wt% |
| ZrO₂ | 0.0-1.5 wt% |
| Fe₂O₃ | 0.0-0.8 wt% |

based on the total weight of the fired ceramic material.

The fired ceramic material may have a chemical composition comprising a combination of oxides according to:

| | |
|---|---|
| SiO₂ | 60.0-68.0 wt% |
| Al₂O₃ | 20.0-24.0 wt% |
| CaO | 2.0-5.0 wt% |
| MgO | 1.2-3.8 wt% |
| ZrO₂ | 0.0-0.5 wt% |
| Fe₂O₃ | 0.0-0.6 wt% |

based on the total weight of the fired ceramic material.

The fired ceramic material may have a chemical composition comprising a combination of oxides according to:

| | |
|---|---|
| SiO₂ | 59.0-70.0 wt% |
| Al₂O₃ | 19.0-25.0 wt% |
| CaO | 1.7-5.8 wt% |
| MgO | 1.5-5.6 wt% |
| ZrO₂ | 0.0-1.9 wt% |
| Fe₂O₃ | 0.0-1.0 wt% |
| TiO₂ | 0.0-1.0 wt% |
| K₂O | 1.0-5.0 wt% |
| Na₂O | 1.0-7.0 wt% |

based on the total weight of the fired ceramic material.

The fired ceramic material may have a chemical composition comprising a combination of oxides according to:

| | |
|---|---|
| SiO₂ | 60.0-68.0 wt% |
| Al₂O₃ | 20.0-24.0 wt% |
| CaO | 2.0-5.0 wt% |
| MgO | 1.2-3.8 wt% |
| ZrO₂ | 0.0-0.5 wt% |
| Fe₂O₃ | 0.0-0.6 wt% |
| TiO₂ | 0.0-0.6 wt% |
| K₂O | 1.0-4.0 wt% |
| Na₂O | 1.0-6.0 wt% |

based on the total weight of the fired ceramic material.

In certain embodiment, the fired ceramic material may comprise:
- from about 21.7 wt% to about 22.3 wt% of Al₂O₃; and/or
- from about 3.2 wt% to about 3.6 wt% of CaO; and/or
- from about 1.7 wt% to about 2.2 wt% of MgO; and/or
- from about 0.3 wt% to about 0.4 wt% of Fe₂O₃;
based on the total weight of the fired ceramic material, wherein the term about means ±10% of the given value.

In other embodiments, the fired ceramic material may further comprise:
- from about 4.7 wt% to about 4.8 wt% of Na₂O; and/or
- from about 2.3 wt% to about 2.5 wt% of K₂O; and/or
- about 0.1 wt% of TiO₂;
based on the total weight of the fired ceramic material, wherein the term about means ±10% of the given value.

There might be other inorganic oxides present in the composition of the fired ceramic material, as well as some material which is calcined and desorbed during the XRF analysis at 1050 °C until there is no more weight lost (known as weight 'lost on ignition' or L.O.I.).

Other inorganic oxides may be present in the composition of the fired ceramic material each in an amount lower than 0.5 wt% based on the total weight of the fired ceramic material; for example in an amount of 0-0.3 wt%.

In an embodiment, the amount of B₂O₃, if any, in the composition of the fired ceramic material is lower than 0.5 wt% based on the total weight of the fired ceramic material. In another embodiment, the amount of B₂O₃, if any, in the composition of the fired ceramic material is 0-0.3 wt% based on the total weight of the fired ceramic material.

In an embodiment, the amount of BaO, if any, in the composition of the fired ceramic material is lower than 0.5 wt% based on the total weight of the fired ceramic material. In another embodiment, the amount of BaO, if any, in the composition of the fired ceramic material is 0-0.3 wt% based on the total weight of the fired ceramic material.

The L.O.I. may be lower than 6.0 wt%, or lower than 4.0 wt%, or lower than 2.0 wt%, based on the weight of the fired ceramic material. In an embodiment, the L.O.I. is lower than 1.0 wt% based on the weight of the fired ceramic material. In a further embodiment, the amount of L.O.I. is in the range 0.01-2.0 wt% or 0.01-1.0 wt%, based on the weight of the fired ceramic material.

The fired ceramic material might be composed by a predominant vitrified (or glassy or amorphous) phase, or at least 50 wt% of glassy or amorphous phase, based on the total weight of the fired ceramic material. Said percentage can be determined for example by XRD. In an embodiment, the fired ceramic material may comprise 55-75 wt% of glassy phase, or 60-70 wt% of glassy phase based on the weight of the fired ceramic material.

According to some embodiments, the fired ceramic material comprises 30-40 wt% of crystalline phases, or 32-40 wt%, based on the weight of the fired ceramic material.

In certain embodiments the fired ceramic material may not comprise, or may comprise less than 10 wt%, or less than 7 wt% of mullite as crystalline phase, based on the weight of the fired ceramic material. In other words, the mullite crystalline phase comprised in the fired ceramic material, may be in the range 0-10 wt%, or 0-7 wt%. In some embodiments, the fired ceramic material comprises 1-10 wt% or 1-7 wt%, of mullite as crystalline phase, based on the weight of the fired ceramic material.

The fired ceramic material may comprise 0-2 wt%, or 0-1 wt% of zircon as crystalline phase, based on the weight of the fired ceramic material. In an embodiment, it may not comprise zircon as crystalline phase.

Also, the fired ceramic material may comprise 1-9 wt%, or 1-7 wt% of quartz as crystalline phase, based on the weight of the fired ceramic material. In an embodiment, it may comprise 4-6 wt% of quartz as crystalline phase.

The fired ceramic material may comprise 5-20 wt%, or 5-15 wt% of anorthite as crystalline phase, based on the weight of the fired ceramic material.

Also, the fired ceramic material may comprise 5-17 wt%, or 7-15 wt% of albite as crystalline phase, based on the weight of the fired ceramic material. In an embodiment, it comprises 10-14 wt% of albite as crystalline phase based on the weight of the fired ceramic material.

In some embodiments, the sum of the weights of anorthite and albite in the fired ceramic material may be in the range 15-35 wt%, or 20-30 wt% based on the weight of the fired ceramic material.

The sum of all crystalline phases in the fired ceramic material may be in the range 25-45 wt%, or 30-40 wt%, based on the weight of the fired ceramic material.

In some embodiments, the sum of all crystalline phases and the amorphous phase in the fired ceramic material may be 100 wt.% based on the weight of the fired ceramic material.

In an embodiment, the fired ceramic material may comprise 50-70 wt% of glassy phase, 1-10 wt% of mullite as crystalline phase, 0-1 wt% of zircon as crystalline phase, 1-7 wt% of quartz as crystalline phase, 5-15 wt% of anorthite as crystalline phase and 7-15 wt% of albite as crystalline phase, based on the weight of the fired ceramic material.

The fired ceramic material may comprise other crystalline phases, such as cristobalite or dolomite, for instance in a total range of 0-5 wt%, or even 0-3 wt%, based on the total weight of the fired ceramic material.

The crystalline phases mentioned can be identified and quantified e.g., by XRD, as described herein.

The fired ceramic material of the disclosure might be a porcelain material, for example a porcelain material as defined in section 3 of EN 14411:2016 or in section 3 of ISO 13006:2018. The fired ceramic material may be a porcelain material of the group I (either Al or BI), or a porcelain material of the group Bla, according to, for example, the classification in Table 1 of EN 14411:2016. The fired ceramic material might also be a porcelain stoneware.

The fired ceramic material may be characterized by having a water absorption of 0.0-0.5%, or 0.0-0.1%, or 0.0-0.06%, when measured e.g. according to ISO 10545-3:2018 (vacuum method). In particular embodiments, the water absorption of the ceramic material is ≤ 0.01% when measured according to this method.

According to the embodiments herein, the fired ceramic material might have an apparent density ≤2.55 g/cm³, such as 2.2-2.5 g/cm³, or 2.25-2.45 g/cm³, or 2.25-2.40 g/cm³, as measured for instance according to ISO 10545-3:2018 (vacuum method) standard.

It is also possible that the fired ceramic material of any of the embodiments has a rectangular parallelepiped form. It may be in the form of a layer. It is also possible that it has a large format, with a length of at least 1.2 m and with a width of at least 0.6 m, or at least 2.4 m length and at least 1.2 m width. In an embodiment, it has at least 3.1 m length and at least 1.3 m width. The length of the fired ceramic material may be 1.2-3.7 m, with a width of 0.6-1.8 m, or 2.4-3.7 m length and 1.2-1.8 width. In a further embodiment, the fired ceramic material has 3.1-3.7 m length and 1.3-1.8 m width.

The thickness of the fired ceramic material might range from 3-40 mm, or from 4-30 mm. In a particular embodiment, the thickness of the fired ceramic material might range from 12-40 mm, or from 12-30 mm.

The fired ceramic material can be 1,200-3,700 mm in length, 600-1,800 mm in width and 3-40 mm in thickness. In another embodiment, the fired ceramic material can be 2,000-3,700 mm in length, 1,000-1,800 mm in width and 3-40 mm, or 12-30 mm, in thickness. In a further embodiment, the fired ceramic material can be 2,400-3,600 mm in length, 1,200-1,700 mm in width and 4-30 mm in thickness, or 12-30 mm in thickness.

The fired ceramic material of any of the embodiments disclosed herein is a component of the slabs or tiles of the disclosure. The fired ceramic material might represent 85-100 wt%, or 90-100 wt%, of the total weight of the slab or tile. In an embodiment, the fired ceramic material represents 95-100 wt% of the total weight of the slab or tile.

In an embodiment, the tile or slab consists of the fired ceramic material of the disclosure.

Alternatively, the tile or slab may comprise additional materials or components besides the fired ceramic material, as known in the art. For example, it might comprise one or more layers or deposits of at least one additional material selected from additional ceramic or porcelain materials (different from the fired ceramic material of the invention), glazes, engobes, inks, frits, grits and mixtures thereof. Said additional materials are usually employed for decoration, protection and/or texturization.

In an embodiment, the fired ceramic material is in the form of a layer and the at least one additional material is in the form of a layer or deposit on one or both major surfaces of the fired ceramic material layer.

The at least one additional material may represent 0-10 wt%, or 0-5 wt%, of the total weight of the tile or slab.

The tile or slab according to the different aspects of the disclosure may have a large format, with a major surface with at least 1.2 m length and at least 0.6 m width, or at least 2.4 m length and at least 1.2 m width. In an embodiment, it might have at least 3.1 m length and at least 1.3 m width. The thickness of the tile or slab might range from 3-40 mm, or from 4-30 mm.

In a particular embodiment, the thickness of the tile or slab might range from 12-40 mm, or from 12-30 mm.

The tile or slab of the disclosure can be 1,200-3,700 mm in length, 600-1,800 mm in width and 3-40 mm in thickness. In another embodiment, it can be 2,000-3,700 mm in length, 1,000-1,800 mm in width and 3-40 mm, or 12-30 mm, in thickness. In a further embodiment, it can be 2,400-3,600 mm in length, 1,200-1,700 mm in width and 4-30 mm in thickness, or 12-30 mm in thickness.

The tiles or slabs of different aspects can be used for construction or decoration applications. They are particularly suitable as a surface for kitchen or vanity countertops, kitchen splashbacks, shower trays, wall or floor coverings, furniture cladding, tabletops, ventilated façade tiles, stovetops, profiles, fireplaces or similar.

Therefore, in another aspect, the disclosure is concerned with the use of a tile or slab according to the different aspects disclosed herein for the manufacture of a kitchen or vanity countertop, kitchen splashback, shower tray, wall or floor covering, furniture cladding, tabletop, ventilated façade tile, stovetop, stair-step, or fireplace. The tile or slab may be cut-to-size in the manufacture of these products.

**In** another aspect, the disclosure is directed to a kitchen or vanity countertop, kitchen splashback, shower tray, wall or floor covering, furniture cladding, tabletop, ventilated façade tile, stovetop, stair-step or fireplace made from a title or slab according to the different aspects disclosed herein. In this aspect, the tile or slab may be cut-to-size to make the kitchen or vanity countertop, kitchen splashback, shower tray, wall or floor covering, furniture cladding, tabletop, ventilated façade tile, stovetop, stair-step or fireplace.

**In** another aspect, the disclosure is directed to a method for the manufacture of a tile or slab according to the first aspect, wherein the method comprises:
a) preparing discrete agglomerates of ceramic raw materials;
b) shaping and compacting the agglomerates to provide a shaped and compacted material with a length of at least 1.2 m and a width of at least 0.6 m;
c) firing the shaped and compacted material with a temperature profile having a maximum between 1,100°C and 1,190°C;
wherein the ceramic raw materials of step a) comprise:
(i) 25-45 wt% of clay materials, and
(ii) 55-75 wt% of non-clay materials,
based on the total weight of said ceramic raw materials;
and wherein the non-clay materials (ii) comprise:
- 50-65 wt% of alkali feldspar,
- 2-10 wt% of a calcium silicate material comprising 9-50 wt% CaO,
- 3-9 wt% of a magnesium containing material comprising 28-31.7 wt% MgO,
- 0-1.5 wt% of a zirconium containing material comprising 45-100 wt% of ZrO₂; based on the total weight of the ceramic raw materials in a).

As used herein, ceramic raw materials are meant to be the raw materials which upon processing and firing would result in a (fired) ceramic material. These ceramic raw materials might be natural or synthetic, such as minerals, frits, sintered materials, etc.

The ceramic raw materials are selected so that the ceramic material after firing has a composition comprising the desired combination of oxides. The skilled person is aware and understands how to calculate the proportion of each available ceramic raw material (clayey and non-clayey) based on their respective compositions, and how to combine them, to obtain the targeted composition of the ceramic material after firing. Specific ceramic raw materials may be exchanged by alternative materials with different composition, e.g. as they might be available in a certain geographic area, adjusting its proportion and the proportions of the other raw materials in the ceramic raw material mixture.

The ceramic raw materials used for the manufacture of the fired ceramic material are commercially available from well-known suppliers. The ceramic industry normally distinguishes between two groups of ceramic raw material, clay materials and non-clay materials. In certain aspects of the disclosure, the ceramic raw materials in step a) comprise clay materials and non-clay materials. The amount of clay materials ranges from 25-45 wt% of the total weight of ceramic raw materials. The amount of non-clay materials ranges from 55-75 wt%.

In an embodiment, the ceramic raw materials in a) consists of 25-45 wt% clay materials and 55-75 wt% of non-clay materials; that is, the sum of the amount of clay materials and no-clay materials is 100 wt%.

The clay materials are those exhibiting high plasticity, such as bentonite clay, fire clay, stoneware clay, kaolin, ball clay, or mixtures thereof. Plasticity is the ability of the material to deform under a stress without rupture and without tendency to returning to the initial shape, a behavior broadly used to classify the raw materials in the ceramic industry.

The clay materials may comprise one or several of kaolin, bentonite clays, fire clays, stoneware clays, ball clays, or mixtures thereof. The clay materials may comprise 5-35 wt%, or 15-30 wt% of kaolin, with respect to the total weight of the ceramic raw materials. The clay materials may comprise kaolin in an amount such that the ceramic raw materials comprise 5-35 wt%, or 15-30 wt% of kaolin based on the total weight of the ceramic raw materials. Kaolin refers to a clay containing the mineral kaolinite as its principal constituent, such as comprising more than 80 wt% kaolinite. The kaolin may be a low iron (e.g. Fe₂O₃ content < 1.0 wt%) kaolin having more than 30 wt% of Al₂O₃.

According to some embodiments, the clay materials may comprise 5-20 wt%, or 5-15 wt% of ball clay, based on the total weight of the ceramic raw materials. Ball clay may be a clay comprising montmorillonite, illite, or both. Therefore, in an embodiment, the ceramic raw materials comprise 5-20 wt%, or 5-15 wt% of ball clay, such as a clay comprising montmorillonite and/or illite, based on the total weight of the ceramic raw materials.

The non-clay materials are those exhibiting low or no significant plasticity, and functionally work typically as fluxes, fillers, opacifiers, pigments or other additives. Non-clay materials may include feldspars, alumina, talc, wollastonite, diopside, tremolite, garnet, corundum, zircon, baddeleyte, quartz minerals, nepheline syenite, and/or mixtures thereof.

The non-clay materials in the raw ceramic materials, according to certain aspects of the disclosure, comprise 50-65 wt% of alkali feldspar, based on the total weight of the ceramic raw materials. In a particular embodiment, the non-clay materials comprise 50-62 wt% of alkali feldspar, based on the total weight of the ceramic raw materials. The alkali feldspar may be selected from sodium feldspar, potassium feldspar, mixed sodium/potassium feldspar, or mixtures thereof.

The term "feldspar" designates a group of naturally occurring aluminum silicate crystalline minerals formed by natural processes (e.g., metamorphism or crystallization in slowly cooled rocks at great terrestrial or magma depths), and found in rocks. The alkali feldspars according to the disclosure conform to the formula: X(Al,Si)₄O₈, where X can be an alkali metal such as K or Na, including sodium feldspar or potassium feldspar. The alkali feldspar, in certain embodiments, may be of high purity and/or low iron oxide content (e.g. with an Fe₂O₃ content of 0-0.5% wt% based on the weight of the alkali feldspar), and may be enriched by floating and magnetic separation.

In the case of sodium feldspar, the Na₂O content in its composition may be greater than 9.5% wt% with respect to the weight of sodium feldspar. For potassium feldspar, the K₂O content in its composition may be at least 10.5% wt% with respect to the weight of potassium feldspar. Mixed sodium/potassium feldspar refers to feldspar with a Na₂O content of 2.0-9.5% wt% and a K₂O content of 2.0-10.5% wt%, based on the weight of the mixed sodium/potassium feldspar. In either case, the Fe₂O₃ content in the alkali feldspar may be in the range 0-0.5% by weight, with respect to the weight of the alkali feldspar.

The non-clay materials in certain aspects of the disclosure comprise 2-10 wt% of a calcium silicate material comprising 9-50 wt% of CaO, or 20-50 wt% of CaO, based on the weight of the ceramic raw materials in a).

In a particular embodiment, said calcium silicate material (e.g. mineral or synthetic) is selected from wollastonite, diopside, tremolite, garnet and mixtures thereof. In a particular embodiment, the calcium silicate material is selected from wollastonite, diopside and mixtures thereof.

In a particular embodiment, the wollastonite comprises at least 40 wt% of CaO, based on the weight of the wollastonite, and/or the diopside comprises at least 20 wt% of CaO, based on the weight of the diopside. The wollastonite and/or diopside might be natural minerals. The natural wollastonite and/or diopside materials might comprise accessory minerals. In some embodiments, the wollastonite mineral may have a CaO content of 40-50 wt% with respect to the weight of the wollastonite mineral. In the case of diopside mineral, the CaO content may be 20-26 wt% with respect to the weight of the diopside mineral. In the case of diopside mineral, alternatively or additionally, the CaO + MgO content may be 30-45 wt% with respect to the weight of the diopside mineral. The wollastonite and/or diopside might as well be synthetic, e.g. manufactured by high temperature treatment (such as sintering or melting) of other minerals, or by melting/quenching into amorphous frits, by processes known in the art. In the case of synthetic wollastonite, the CaO content may be of at least 40 wt% with respect to the weight of the synthetic wollastonite. Synthetic diopside may have a CaO content of 20-26 wt% with respect to the weight of the synthetic diopside. Additionally or alternatively, the synthetic diopside may have a CaO + MgO content of at least 30-45 wt% with respect to the weight of the synthetic diopside.

The calcium silicate material may comprise 0.0-0.7 wt% of and/or 0.0-0.1 wt% of TiO₂, based on the weight of the calcium containing material. This content can be measured e.g. by XRF.

**In** certain aspects of the disclosure, the non-clay materials comprise, based on the total weight of the raw ceramic materials, 3-9 wt% of a magnesium containing material comprising 28.0-31.7 wt% of MgO with respect to the weight of the magnesium containing material.

**In** a particular embodiment, said magnesium containing material is a magnesium silicate, either natural or synthetic. The magnesium containing material may be talc (or steatite). Said magnesium containing material, magnesium silicate, or talc, may have a composition comprising 30.0-31.7 wt% of MgO, with respect to the weight of the magnesium containing material. In an embodiment, said magnesium containing material, magnesium silicate, or talc, may be comprised in the range 4-8 wt% based on the weight of the ceramic raw materials.

The non-clay materials may comprise, based on the total weight of the ceramic raw materials, 0-1.5 wt% of a zirconium containing material comprising 45-100 wt% of ZrO₂ based on the weight of this zirconium containing material. Said zirconium containing material may be selected from zircon or baddeleyite. In certain embodiments, the non-clay materials do not comprise any zircon, baddeleyite, or any zirconium containing material (synthetic or natural) that comprises at least 45 wt% of ZrO₂ based on the weight of the material.

The non-clay materials in the ceramic raw materials might comprise quartz minerals, understood as minerals having a quartz content higher than 70 wt%. In some embodiments, the ceramic raw materials may comprise, based on the total weight of the raw ceramic materials, 0-3 wt%, or 0-2 wt%, or 0-1 wt% of quartz mineral with a quartz content higher than 70 wt% based on the weight of the quartz mineral. In certain embodiments, the ceramic raw materials do not comprise any quartz mineral with a quartz content higher than 70 wt% based on the weight of the quartz mineral. That is, the ceramic raw materials either do not comprise any quartz mineral with a quartz content higher than 70 wt% or, if they do, they may comprise such quartz mineral an amount not higher than 3 wt%, 2 wt% or 1 wt%, based on the total weight of the raw ceramic materials. The quartz minerals with a quartz content higher than 70 wt% might be selected from the group of quartz, feldspathic sand, flint, silica sand, and mixtures thereof. Without wanting to be bound by theory, the absence or low content of quartz minerals in the ceramic raw materials is thought to minimize the effect of expansion/shrinkage of the ceramic material during firing and subsequent cooling, caused by quartz phase inversion at high temperature, what translates into lower internal stresses in the fired ceramic material produced. The reduction of internal stresses achieved by the absence or low quartz ceramic raw material content is particularly advantageous in large format fired ceramic materials, since they are more prone to be fragile and to fracture when cut and/or handled if those stresses are present.

**In** embodiments, the non-clay materials in the ceramic raw materials might also comprise carbonate minerals such as calcite or dolomite. However, in some embodiments, the carbonate mineral content in the ceramic raw materials, if present, is ≤3 wt%, or ≤1 wt%, based on the total weight of the ceramic raw materials. Therefore, the non-clay materials in the ceramic raw materials may comprise carbonate minerals, such as calcite or dolomite, in an amount of 0-3 wt%, or 0-1 wt%, based on the total weight of the ceramic raw materials.

The ceramic raw materials, comprising the combination of clay and non-clay materials, as used for the manufacture of the ceramic agglomerates in step a), when taken as a whole, may comprise Fe₂O₃ in a concentration ≤ 1.0 wt%, or ≤ 0.8 wt%, or even ≤ 0.6 wt%, and/or TiO₂ in a concentration ≤ 1.0 wt%, or ≤ 0.8 wt%, or even ≤ 0.6 wt%, based on the total weight of the ceramic raw materials. In other words, said ceramic raw materials might not comprise Fe₂O₃ and/or TiO₂, or if present, they are in an amount lower than the wt% disclosed above.

The manufacture of the fired ceramic material comprised in the slabs or tiles starts with the provision of discrete ceramic agglomerates (e.g. granulates, particulates or powders) from ceramic raw materials (step a)). In an example, for the manufacture of the ceramic agglomerates, the raw materials might be ground, for example to a particle size under 63 micrometers, in a ball mill with water to produce an aqueous slip, which might be stored after sieving for later use. The slip is then spray-dried by pulverizing the slip through nozzles in an air stream of hot air, removing most of the water, and producing the discrete ceramic agglomerates which are discharged from the lower part of the spray-drier.

Other methods for the manufacture of the discrete ceramic agglomerates are possible, known in the technique, and within the scope of the invention. Thus, for instance, the ceramic agglomerates might be manufactured by grinding the raw materials without addition of large amounts of water, e.g. in pendular or hammer mills, and afterwards agglomerated in powder granulators with a small amount of water.

The term discrete means that the agglomerates have not been shaped or molded, e.g. in the form of a layer, but are in the form of individual or discrete units.

The discrete ceramic agglomerates may have a humidity of 4-10 wt%, based on the weight of said agglomerates. The size of the diameter (particle size) of the agglomerates may range suitably from 125-800 micrometers.

In the present application, the term "agglomerates" usually refers to individual or discrete units of smaller particulate materials (e.g. granulates, particulates, or powder particles). This term encompasses discrete products of a variety of shapes and sizes, including grain particles, granulates, flakes, pellets, or combinations of these.

The discrete ceramic agglomerates are then shaped to form a shaped material, such as a layer, which might be continuous or discrete (step b)). Shaping shall be understood as the collection of a plurality of the discrete ceramic agglomerates into a defined and repeatable form or shape, e.g. by dispensation to a surface, or into a mold. The shaped material or layer may be of uniform thickness, homogeneous, with minimal density and composition variations. To achieve the shaped material or layer of ceramic agglomerates, for example, the ceramic agglomerates might be transported from a reservoir where they are stored to a dispensing system which deposits them onto a moving conveyor belt or to a molding cavity. Forming systems as the one described are known in the art, for example for the formation of shaped materials or layers from spray dried ceramic agglomerates. Other shaped material or layer forming methods are possible, known and within the invention.

The shaped material or layer of ceramic agglomerates is compacted (e.g. subsequently) to high pressures. In a particular embodiment, step b) comprises shaping and then compacting. The compaction may be conducted by means of a hydraulic axial press or a double-belt press, or a combination of both, e.g. using a double-belt press for a pre-compaction step, before the shaped material or layer is compacted in an axial press. The maximum pressure during compaction may reach at least 250 kg/cm², or 300-600 kg/cm², or 400-600 kg/cm². The high pressures favor the production of fired ceramic materials with higher mechanical strength and minimum porosity.

The shaped compacted material is provided with a length of at least 1.2 m and a width of at least 0.6 m. According to an embodiment, it is provided with at least 2.4 m length and at least 1.2 m width. In an embodiment, the shaped compacted material is provided with at least 3.1 m length and at least 1.4 m width. The length of the compacted material may be 1.2-3.7 m, with a width 0.6-1.8 m, or 2.4-3.7 m length and 1.2-1.8 width, or even 3.1-3.7 m length and 1.4-1.8 m width. In case the shaped material forms a continuous layer, the desired length/width combination can be provided by trimming this layer either before compacting (e.g. when using axial pressing compaction) or after compacting (e.g. when using double-belt press compaction).

In some embodiments, layers, deposits or precursors thereof, may be applied to the compacted unfired material (i.e. after step b)), for example to one or both major surfaces of the compacted unfired ceramic material, with the aim to provide decoration, protection, texturization, functionality or other superficial effects to the fired ceramic material. Such layers, deposits or precursors thereof include for example glazes, engobes, frits, grits, inks, their precursors, or mixtures thereof. By precursor it is meant the substances, materials, mixtures or compositions, which result in the layers or deposits after being fired simultaneously with the compacted unfired material. Additionally, or alternatively, the layers, deposits or precursors thereof may be applied to the ceramic material after firing (i.e. after step c)), and optionally subjecting the layers, deposits or precursors thereof on the fired ceramic material to subsequent additional steps such as firing, hardening or drying.

Optionally, the compacted unfired ceramic material, with or without additional layers, deposits or precursors thereof, can be dried to reduce the humidity content to 0.0-1.0 wt%, or 0.0-0.7 wt%, based on the weight of the compacted unfired ceramic material, before the compacted material is fired (i.e., before step c)). This can be done for instance with the unfired ceramic material in horizontal orientation using conventional ceramic driers.

After compaction and optional drying, the compacted (unfired) ceramic material is fired with a temperature profile having the maximum in the range 1,100-1,190 °C, or 1,110-1,185 °C, or 1,120-1,180 °C. In an embodiment, the temperature profile has a maximum in the range 1,150-1,180 °C. The temperature firing profile (or firing cycle) suitably includes pre-heating, heating and cooling phases, the cooling phase ending when the temperature reaches 60 °C. The firing profile (including pre-heating, heating and cooling phases) may have a duration ranging from 60-500 minutes, such as 70-440 minutes, depending on the thickness of the ceramic material being fired. The residence time at the maximum temperature may range from 5-70 minutes, depending on the thickness of the ceramic material being fired. In an embodiment, the residence time at the maximum temperature is in the range 5-55 minutes. Firing can be conducted in a roller kiln for high temperature or other type of kiln used for substantially flat ceramic products. This maximum firing temperature results in sintering, reaction and vitrification of the compacted raw materials, increasing the compactness and hardness of the fired ceramic material.

After firing, the tile or slab can be cut and/or calibrated to the desired final dimensions, and may be finished (polished, honed, etc.) on one or both of its larger surfaces, depending on the intended application.

In another aspect, the disclosure is directed to a tile or slab obtainable by the method of manufacture disclosed herein.

Unless otherwise specified, the proportions and concentrations of ceramic raw materials presented in this description refer to the dry materials, obviating or disregarding any humidity they might content.

It should be understood that the scope of the present disclosure includes all the possible combinations of embodiments disclosed herein.

### Definitions and testing methods:

XRF: Oxide analysis might be conducted by X-Ray Fluorescence, for instance in a commercial XRF spectrometer. For example, a disc of about 1 g of a sample is mixed with lithium tetraborate and calcined in air atmosphere at a temperature 1.050 °C for 25 minutes prior to analysis in the spectrometer. The results are reported as relative weight percentage of oxides (SiO₂, Al₂O₃, etc.), together with the weight 'lost on ignition' during calcination (evaporation/desorption of volatiles, decomposition of organic matter). The spectrometer is previously calibrated with multipoint calibration curves of known concentration of standards. The international standard ISO 12677:2011 may be followed for XRF analysis.

XRD: As way of example, the identification and quantification of crystalline phases can be done by powder X-Ray Diffraction (XRD) and the Rietveld method, combined with the use of an internal standard. This method allows to quantify the overall amorphous phase as well. The internal standard methodology requires a known amount of reference standard (corundum, for example) to be thoroughly mixed and homogenized with each sample to be analyzed, optionally employing a small amount of isopropanol or other mixing/homogenizing adjuvant. A Ge(111) monochromator generating CuKα₁ radiation and a X'Celerator detector of a commercial equipment (e.g. PANalytical X'Pert Pro automated diffractometer) may be used. X-Ray diffraction patterns of powder may be recorded between 4° - 70° in 2θ at 60 s/step, while rotated to increase particle statistics distribution. Once the X-ray powder diffraction data is obtained, a software (e.g. DIFFRAC.EVA by Brucker) can be used to carry out the identification of the crystalline phases by comparison with catalogued diffraction patterns. The quantification by the crystalline and amorphous phases may be conducted with Rietveld refinement method, e.g. by using the TOPAS software (by Coelho Software). The content of crystalline phases and overall amorphous phase is calculated as weight percentage of the sample analyzed, after subtracting the amount of the internal standard used.

The particle size, also called particle diameter, of the agglomerates can be measured by known screening separation using sieves of different mesh size. The term "particle size" as used herein, means the range in which the diameter of the individual particles in the agglomerates falls. It can be measured by particle retention or passage on calibrated sieves that have measured mesh size openings, where a particle will either pass through (and therefore be smaller than) or be retained by (and therefore larger than) a certain sieve whose size openings are measured and known. Particle sizes are defined to be within a certain size range determined by a particle's ability to pass through one sieve with larger mesh openings or 'holes" and not pass through a second sieve with smaller mesh openings. For agglomerates with a particle size < 200 micrometers, the particle size distribution can be measured by laser diffraction with a commercial equipment (e.g. Malvern Panalytical Mastersizer 3000 provided with a Hydro cell). For the measurement, the agglomerate sample might be dispersed in demineralized water assisted by an ultrasound probe. The laser diffractometer provides particle distribution curves (volume of particles vs. particle size) and the D10, D50 and D90 statistical values of the particle population (i.e., particle size values where 10%, 50% or 90% of the sample particle population for a volume distribution lies below this value, respectively).

Water absorption and apparent density of the fired ceramic layer were measured according to ISO 10545-3:2018 (vacuum method). For determination of the apparent density of unfired ceramic samples, the generally known method of mercury pycnometry may be used, in which the weight of mercury (density 13,534 g/cm³) in a container of known volume, containing the previously weighted ceramic sample, is used to compute apparent density of the sample.

Colorimetry may be measured according to ISO 10545-16:2010, for example by using a spectrophotometer, such as a CM-2500d spectrophotometer from Konica Minolta Inc.. This spectrophotometer is normally located over the clean surface of a representative area of the sample to be analyzed, at room temperature, and the measurement is done following the spectrophotometer manufacturer instructions. The result averaged from three measurements is given as coordinates L*, a* and b* in the CIELAB color space.

Shrinkage during firing may be measured following the ISO 10545-2:2018.

### Examples according to the invention and comparative examples

### Example 1:

Five mixtures A-E were prepared separately and in a similar way by adding raw materials and water to a ball grinding mill and then collecting the slip formed after the mixtures were homogeneous and the particle size was predominantly under 63 micrometers (with a maximum of 1.0% of particles in a volume distribution above this size). The slip mixtures were then partially dried to a humidity content of approximately 7.5 wt%, molded and pre-compacted with a pressure of 450 kg/cm² to 100x50 mm² shaped molded (unfired) Test Samples with a thickness of 7.0 mm.

The mixture E had a composition according to the claims, while mixtures A, B, C and D are included here for comparison purposes.

The raw materials of the mixtures A-E included the ratios of clay and non-clay materials depicted in Table 1. The wt% in Table 1 and through the rest of the description of the examples did not consider any humidity content of the raw materials. The sum of clay and non-clay materials made 100 wt% of the raw material composition.

**Table 1**

| Mixture | Clay minerals | Non-clay minerals |
|---|---|---|
| A* | 38 wt% | 62 wt% |
| B* | 33 wt% | 67 wt% |
| C* | 40 wt% | 60 wt% |
| D* | 39 wt% | 61 wt% |
| E | 32 wt% | 68 wt% |

| | | |
|---|---|---|
| *Comparative | | |

The clay and non-clay raw materials were commercially available products obtained from suppliers known. The amount of each raw material was adjusted, taking their compositions into account, to result in the fired composition after firing listed in Table 2 below.

The clay materials in all A-E mixtures comprised different amounts of ball clay (such as montmorillonite, illite containing clays) and/or kaolin. The amount of kaolin in Mixtures C-E ranged 15-25 wt% with respect to the total weight of each mixture, while kaolin was comprised in the range 5-15 wt% in Mixtures A-B with respect to the total weight of each mixture.

The non-clay materials included predominantly feldspar minerals together with different amounts of talc, alumina, zircon minerals and/or alumina.

The non-clay materials in Mixtures A-E comprised predominantly feldspars such as sodium feldspar, potassium feldspar and/or mixed alkali feldspars in an amount of 53-58 wt% with respect to the total weight of each mixture.

The raw materials for mixture E comprised 5-6 wt% wollastonite with respect to the total weight of Mixture E, as part of the non-clay minerals, while mixtures A - D did not comprise any wollastonite. None of the mixtures A-E comprised any quartz mineral with a quartz content higher than 70 wt% (that is, a mineral mixture where quartz is predominant, such as quartz mineral or feldspathic sands).

The non-clay materials in Mixture E comprised talc in an amount of approximately 6 wt% with respect to the total weight of Mixture E. Talc was also comprised in Mixtures C and D, in an amount of approximately 2 wt.% with respect to the total weight of the respective mixture. Neither Mixture A nor Mixture B comprised any talc. In all cases, the talc comprised a content of MgO of at least 30 wt% with respect to its weight.

Only Mixtures A and B comprised corundum, a non-clay mineral, in an amount of 1-2 wt% with respect to the total weight of each respective mixture. Mixtures C-E did not comprise any added corundum.

Mixtures C and E did not comprise any zircon, while Mixture A comprised approximately 7 wt%, Mixture B approximately 12 wt%, and Mixture D approximately 3 wt%, in all cases with respect to the total weight of each respective raw material mixture.

The molded unfired Test Samples were then pressed with a pressure reaching 450 kg/cm² before they were dried at 110 °C to decrease humidity content to <1.0% wt% and then, they were fired in a muffle furnace for 110 minutes reaching a maximum temperature of 1,175 °C, resulting in corresponding fired Test Samples A - E.

The compositions of the obtained fired Test Samples A - E, as determined by XRF, are depicted in Table 2.

**Table 2**

| Component | Test Sample A* (wt%) | Test Sample B* (wt%) | Test Sample C* (wt%) | Test Sample D* (wt%) | Test Sample E (wt%) |
|---|---|---|---|---|---|
| SiO₂ | 63.3 | 61.9 | 65.4 | 64.7 | 64.4 |
| Al₂O₃ | 23.3 | 22.3 | 24.8 | 24.0 | 22.2 |
| CaO | 0.6 | 0.6 | 0.7 | 0.7 | 3.3 |
| MgO | 0.2 | 0.2 | 0.8 | 0.8 | 2.2 |
| ZrO₂ | 4.0 | 6.5 | 0.0 | 1.7 | 0.0 |
| Fe₂O₃ | 0.4 | 0.3 | 0.3 | 0.3 | 0.4 |
| TiO₂ | 0.4 | 0.4 | 0.2 | 0.3 | 0.1 |
| Na₂O | 4.3 | 4.2 | 5.0 | 4.8 | 4.8 |
| K₂O | 3.3 | 3.1 | 2.6 | 2.5 | 2.5 |
| Other oxides + L.O.I.^{‡} | 0.2 | 0.5 | 0.2 | 0.2 | 0.1 |
| | | | | | |
| Ratio SiO₂/Al₂O₃ | 2.7 | 2.8 | 2.6 | 2.7 | 2.9 |
| CaO + MgO | 0.8 | 0.8 | 1.5 | 1.5 | 5.5 |
| Fe₂O₃ + TiO₂ | 0.8 | 0.8 | 0.5 | 0.6 | 0.5 |

| | | | | | |
|---|---|---|---|---|---|
| *Comparative, ^{‡}Weight lost on ignition | | | | | |

The different crystalline phases formed during firing for the Test Samples A - E, and their relative concentration, as measured by XRD are listed in Table 3.

**Table 3**

| Phase | Test Sample A* (wt%) | Test Sample B* (wt%) | Test Sample C* (wt%) | Test Sample D* (wt%) | Test Sample E (wt%) |
|---|---|---|---|---|---|
| Quartz [SiO₂] | 9.9 | 9.3 | 9.0 | 9.1 | 5.3 |
| Cristobalite [SiO₂] | 0.3 | 0.4 | 0.3 | 0.4 | 1.0 |
| Zircon [ZrSiO₄] | 5.6 | 9.2 | - | 2.7 | - |
| Anorthite [CaAl₂Si₂O₈] | - | - | - | - | 11.9 |
| Mullite [Al₆Si₂O₁₃] | 7.7 | 7.2 | 11.4 | 11.2 | 5.0 |
| Albite [NaAlSi₃O₈] | 5.0 | 5.0 | 6.3 | 5.1 | 12.9 |
| Dolomite [CaMg(CO₃)₂] | 0.3 | 0.3 | 0.4 | 0.4 | 0.4 |
| | | | | | |
| Amorphous phase | 71.2 | 68.6 | 72.6 | 71.1 | 63.5 |
| Total crystalline phases | 28.8 | 31.4 | 27.4 | 28.9 | 36.5 |

| | | | | | |
|---|---|---|---|---|---|
| *Comparative | | | | | |

The XRD results in Table 3 evidence the differences in crystalline mineral phases formed during firing for the different Test Samples. Overall, the sum of the weights of the different crystalline phases in Test Sample E is significantly higher than in comparative Test Samples A-D. In other words, comparative Test Samples A-D comprise in all cases a higher content of amorphous (or vitreous) phase than in Test Sample E. The crystalline mineral phases dominant in Test sample E are anorthite and albite, making nearly 25 wt% of the sample. The anorthite phase goes from being not detectable in comparative Test Samples A-D, to nearly 12 wt% in Test Sample E. The albite content is more than double for Test Sample E, than for comparative Test Samples A-D. Compared with Test Samples A-D, Test Sample E has significantly reduced mullite and quartz contents.

Table 4 shows a comparison of properties of the Test Samples before and after firing:

**Table 4**

| Parameter | Test sample | | | | | |
|---|---|---|---|---|---|---|
| | A* | B* | C* | D* | E | |
| Breaking strength of compacted and dried Test sample before firing (ISO 10545-4:2019) [kg/cm²] | 33.0 | 32.7 | 29.9 | 33.0 | 32.1 | |
| Apparent density of Test Sample after pressing and drying and before firing | 1.97 | 2.02 | 1.92 | 1.95 | 1.91 | |
| Shrinkage during firing | 8.2% | 8.3% | 7.9% | 8.1% | 6.6% | |
| Apparent density after firing (ISO 10545-3:2018) [g/cm³] | 2.52 | 2.56 | 2.43 | 2.47 | 2.34 | |
| Water absorption after firing | ≤ 0.01% | 0.01% | ≤ 0.01% | ≤ 0.01% | 0.01% | |
| (ISO 10545-3:2018) | | | | | | |
| Breaking strength after firing (ISO 10545-4:2019) [kg/cm²] | | 834 | 746 | 733 | 705 | 712 |
| CIELAB Colorimetry | L* | 84.3 | 86.3 | 79.4 | 82.9 | 82.1 |
| | a* | 1.2 | 0.9 | 1.8 | 1.1 | 0.8 |
| | b* | 9.7 | 9.0 | 9.4 | 9.3 | 8.8 |

| | | | | | | |
|---|---|---|---|---|---|---|
| *Comparative | | | | | | |

Pressed and dried Test Sample E showed a reduced apparent density before firing compared with Test Samples A-D. Despite this, compacted and dried Test Sample E still maintained a similar level of mechanical stability before firing, a parameter important for allowing handling without fissures or breakages of the large format unfired slabs, as they are transported through the different manufacturing stations.

Fired Test Sample E had the lowest apparent density of all the Test Samples. In addition, it showed a remarkably reduced shrinkage of its dimensions during firing. The reduction in firing shrinkage is an advantage of great relevance when considering the industrial production of tiles in large format, where significantly more square meters of fired tiles can be obtained from unfired pressed tiles of same size with the composition of Test Sample E compared to Test Samples A-D.

Without wanting to be bound by theory, it seems the formation of anorthite crystalline phase rich in calcium during firing, which have a lower packing density than mullite and zircon, and partially also the lower amorphous content, helps reducing the density and shrinkage of the Test Sample E compared to Test Samples A - D.

The advantages mentioned are obtained for Test Sample E, without the mechanical stability after firing being compromised, and while still achieving a similar level of colorimetry. The water absorption in all three cases remains negligible, equal or below 0.01%, indicating a nearly absent open porosity.

### Example 2:

Test Samples F, G, H were prepared from the respective raw material mixtures F, G and H following the same procedure as for Test Sample E, and using similar raw materials. However, in the case of these Test Samples the proportion of raw materials ball clays, kaolin, talc and wollastonite in the mixtures was slightly varied compared to Test Sample E. The Test Samples F, G and H, were according to different aspects of the disclosure herein.

The variations in the raw material proportions lead to the compositions, as determined by XRF, of the Test Samples F - H fired at a maximum temperature of 1,175 °C depicted in Table 5.

**Table 5.**

| Component | Test Sample F (wt%) | Test Sample G (wt%) | Test Sample H (wt%) |
|---|---|---|---|
| SiO₂ | 65.1 | 65.1 | 65.1 |
| Al₂O₃ | 22.3 | 21.9 | 21.7 |
| CaO | 3.2 | 3.2 | 3.6 |
| MgO | 1.7 | 2.2 | 2.0 |
| ZrO₂ | 0.0 | 0.0 | 0.0 |
| Fe₂O₃ | 0.3 | 0.3 | 0.3 |
| TiO₂ | 0.1 | 0.1 | 0.1 |
| Na₂O | 4.8 | 4.7 | 4.8 |
| K₂O | 2.4 | 2.3 | 2.3 |
| Other oxides + L.O.I.^{‡} | 0.1 | 0.1 | 0.1 |
| | | | |
| Ratio SiO₂/Al₂O₃ | 2.9 | 3.0 | 3.0 |
| CaO + MgO | 4.9 | 5.4 | 5.6 |
| Fe₂O₃ + TiO₂ | 0.4 | 0.4 | 0.4 |

| | | | |
|---|---|---|---|
| Weight lost on ignition | | | |

Table 6 shows a comparison of properties of the Test Samples F-H before and after firing.

**Table 6.**

| Parameter | Test sample | | | |
|---|---|---|---|---|
| | F | G | H | |
| Shrinkage during firing | 6.2 % | 6.7 % | 5.4 % | |
| Apparent density after firing (ISO 10545-3:2018) [g/cm³] | 2.36 | 2.37 | 2.34 | |
| Water absorption after firing (ISO 10545-3:2018) | 0.01 % | 0.00 % | 0.06 % | |
| Breaking strength after firing (ISO 10545-4:2019) [kg/cm²] | 597 | 745 | 685 | |
| CIELAB Colorimetry | L* | 82.7 | 82.5 | 83.8 |
| | a* | 0.8 | 0.7 | 0.6 |
| | b* | 8.6 | 8.6 | 8.6 |

Test Samples F-H, being according to the aspects of the disclosure, show advantageous features that are in line with the ones already being identified for Test Sample E, such as reduced shrinkage during firing, reduced apparent density, low water absorption and a CIELAB colorimetry with a L* coordinate in the range 75-85.

### Example 3:

The formulations for the Test Samples A, B, C, D and E were employed as base for the manufacture at industrial scale of tiles of at least 3.2 m length and 1.4 m width, and with a thickness of 2 cm. Tiles A, B, C, D and E comprised a fired ceramic layer based on the formulation of Test Sample A, B, C, D or E, respectively. Tiles E were thus according to the claims, while tiles A-D are included here for comparison.

In the industrial production of the fired ceramic layers in Tiles A, B, C, D and E, the same basic steps as for the preparation of the Test Samples A, B, C, D and E were followed. However, in the industrial manufacture, after wet grinding of the raw materials in the ball mill, the slips were partially dried in an industrial spray-drier to obtain powders having a humidity content of 8.5% and with particle sizes predominantly <800 micrometers. The powders were then shaped by dispensing them as a uniform layer on a forming belt and pre-compacted before they were subjected to compaction to a pressure of at least 450 kg/cm². The compacted (unfired) ceramic layers were cut to a length of 3.55 m and a width of 1.63 m, and were further dried until a humidity content of 0-1 wt% was reached, before they were fired in a roller kiln reaching a maximum temperature of around 1,150-1,180 °C and a residence time at this maximum temperature of about 10-30 minutes.

The compositions of the fired ceramic layer in Tiles A, B, C, D and E were similar to the compositions of the corresponding Test Sample A, B, C, D or E in Example 1.

Starting from the same length and width dimensions of the compacted (unfired) ceramic layers, Tiles C had a surface after firing 1.63 % larger than the surface after firing Tile A. Tiles E according to the disclosure had a surface after firing 3.97 % larger than the surface after firing Tile A, and 2.31 % larger than the surface after firing Tile C. No significant change in the surface after firing was appreciated between Tiles A and B, or between Tiles C and D. Tile E showed a remarkably higher useful surface after firing thanks to its reduced shrinking during firing.

Tiles A, B, C, D and E were cut at 90° relative to their major surfaces with a CNC bridge saw provided with a commercial freshly sharpened disk appropriate for porcelain stoneware. The maximum speed was recorded at which the disk could be moved repetitively as it cuts through the tile at 2400 rpm producing clean cuts, without chipping or tile cracking. The cuts were done longitudinally along the length of the tile, and separated 2 cm apart. The maximum cutting speed for Tiles A and B, which could be used to cut them repetitively without chipping or cracking, could not be increased beyond 0.8-0.9 m/min. In the case of Tiles C and D, the maximum cutting speed was found to be 1.0-1.1 m/min. Beyond this figure, the cleanness of the cut and the number or tile cracks was found unacceptable. Cutting behavior of Tile E proved to be significantly enhanced. Tile E could be cut cleanly at a speed exceeding 1.5 m/min without showing any problems of chipping of the cut edges, or occurrence of tile breakages/cracking.

## Claims

1. Tile or slab comprising a fired ceramic material, wherein the fired ceramic material has a length of at least 1.2 m and a width of at least 0.6 m and has a chemical composition comprising a combination of oxides according to:
| | |
|---|---|
| SiO₂ | 59.0-70.0 wt% |
| Al₂O₃ | 19.0-25.0 wt% |
| CaO | 1.7-5.8 wt% |
| MgO | 1.2-5.6 wt% |
| ZrO₂ | 0.0-1.9 wt% |
| Fe₂O₃ | 0.0-1.0 wt% |
based on the total weight of the fired ceramic material;
wherein the fired ceramic material comprises 45-75 wt% of glassy phase, 5-20 wt% of anorthite and 5-17 wt% of albite, based on the weight of the fired ceramic material, and
wherein the fired ceramic material comprises 0-10 wt% of mullite, 0-2 wt% of zircon and 1-9 wt% of quartz, based on the weight of the fired ceramic material.

2. Tile or slab according to claim 1, wherein the sum of the weight percentages of CaO + MgO is in the range 4.0-7.0 wt%, or 4.5-6.5 wt%, based on the total weight of the fired ceramic material.

3. Tile or slab according to any one of claims 1 to 2, wherein the sum of the weight percentages of SiO₂+Al₂O₃+CaO+MgO in the fired ceramic material represents at least 80.0 wt%, or at least 90.0 wt%, of the total weight of the fired ceramic material.

4. Tile or slab according to any one of claims 1 to 3, wherein the fired ceramic material has a chemical composition comprising:
- 60.0-68.0 wt% of SiO₂; and/or
- 20.0-24.0 wt% of Al₂O₃; and/or
- 2.0-5.0 wt% of CaO; and/or
- 1.2-3.8 wt% of MgO; and/or
- 0.0-1.0 wt% of ZrO₂; and/or
- 0.0-0.6 wt% of Fe₂O₃;
based on the total weight of the fired ceramic material.

5. Tile or slab according to any one of claims 1 to 4, wherein the fired ceramic material has a chemical composition further comprising:
- 1.0-7.0 wt%, or 2.0-6.0 wt%, of Na₂O; and/or
- 1.0-5.0 wt%, or 1.0-4.0 wt%, of K₂O; and/or
- 0.0-1.0 wt%, or 0.05-0.6 wt%, of TiO₂;
based on the total weight of the fired ceramic material.

6. Tile or slab according to any one of claims 1 to 5, wherein the fired ceramic material has a chemical composition comprising a combination of oxides according to:
| | |
|---|---|
| SiO₂ | 60.0-68.0 wt% |
| Al₂O₃ | 20.0-24.0 wt% |
| CaO | 2.0-5.0 wt% |
| MgO | 1.2-3.8 wt% |
| ZrO₂ | 0.0-0.5 wt% |
| Fe₂O₃ | 0.0-0.6 wt% |
| TiO₂ | 0.0-0.6 wt% |
| K₂O | 1.0-4.0 wt% |
| Na₂O | 1.0-6.0 wt% |
based on the total weight of the fired ceramic material.

7. Tile or slab according to any one of claims 1 to 6, wherein the fired ceramic material has a chemical composition comprising:
- 3.5-6.0 wt% of Na₂O, such as 4.0-5.5 wt% of Na₂O, based on the total weight of the fired ceramic material; and/or
- 2.2-4.0 wt% of K₂O, based on the total weight of the fired ceramic material.

8. Tile or slab according to any one of claims 1 to 7, wherein:
- the sum of the amount of K₂O + Na₂O in the composition of the fired ceramic material is in the range 5.5-11.0 wt%, such as such as 6.0-9.0 wt%, based on the total weight of the fired ceramic material; and/or
- the amount of B₂O₃, if any, in the composition of the fired ceramic material is lower than 0.5 wt%, such as 0-0.3 wt%, based on the total weight of the fired ceramic material; and/or
- the amount of BaO, if any, in the composition of the fired ceramic material is lower than 0.5 wt%, such as 0-0.3 wt%, based on the total weight of the fired ceramic material.

9. Tile or slab according to any one of claims 1 to 8, wherein the fired ceramic material comprises 5-10 wt% of albite as crystalline phase, based on the total weight of the fired ceramic material.

10. Tile or slab according to any one of claims 1 to 9, wherein the sum of all crystalline phases in the fired ceramic material ranges 30-40 wt%, based on the total weight of the fired ceramic material.

11. Tile or slab according to any one of claims 1 to 10, wherein:
- the fired ceramic material has a length of at least 2.4 m and a width of at least 1.2 m; and/or
- the fired ceramic material has a L* coordinate of 75-85; and/or
- the tile or slab further comprises a layer or deposit of porcelain, glaze, engobe, ink, frit and/or grit.

12. A kitchen or vanity countertop, kitchen splashback, shower tray, wall or floor covering, furniture cladding, tabletop, ventilated façade tile, stovetop, stair step, or fireplace made from a title or slab as defined in any one of claims 1 to 11.

13. Method for the manufacture of a tile or slab as defined in any one of claims 1 to 11, wherein the method comprises:
a) preparing discrete agglomerates of ceramic raw materials;
b) shaping and compacting the agglomerates to provide a shaped and compacted material with a length of at least 1.2 m and a width of at least 0.6 m;
c) firing the shaped and compacted material with a temperature profile having a maximum between 1,100°C and 1,190°C;
wherein the ceramic raw materials of step a) comprise:
(i) 25-45 wt% of clay materials, and
(ii) 55-75 wt% of non-clay materials,
based on the total weight of said ceramic raw materials;
and wherein the non-clay materials (ii) comprise:
- 50-65 wt% of alkali feldspar,
- 2-10 wt% of a calcium silicate material comprising 9-50 wt% CaO,
- 3-9 wt% of a magnesium containing material comprising 28-31.7 wt% MgO,
- 0-1.5 wt% of a zirconium containing material comprising 45-100 wt% of ZrO₂; based on the total weight of the ceramic raw materials in a).

14. Method according to claim 13, wherein the non-clay materials (ii) comprise, based on the total weight of the ceramic raw materials, 0-3 wt% of a quartz mineral with a quartz content higher than 70 wt%.

15. Method according to any one of claims 13 to 14, which further comprises a step of providing a layer, deposit or a precursor thereof, of a glaze, pigment, engobe, grit, frit, ink or a combination thereof on the shaped and compacted material obtained after step b).

## Patentansprüche

1. Fliese oder Platte, umfassend ein gebranntes Keramikmaterial, wobei das gebrannte Keramikmaterial eine Länge von mindestens 1,2 m und eine Breite von mindestens 0,6 m aufweist und eine chemische Zusammensetzung aufweist, umfassend eine Kombination von Oxiden gemäss:
| | |
|---|---|
| SiO₂ | 59,0-70,0 Gew.-% |
| Al₂O₃ | 19,0-25,0 Gew.-% |
| CaO | 1,7-5,8 Gew.-% |
| MgO | 1.2-5.6 Gew.-% |
| ZrO₂ | 0,0-1,9 Gew.-% |
| Fe₂O₃ | 0,0-1,0 Gew.-% |
basierend auf dem Gesamtgewicht des gebrannten Keramikmaterials;
wobei das gebrannte Keramikmaterial 45-75 Gew.-% einer glasigen Phase, 5-20 Gew.-% Anorthit und 5-17 Gew.-% Albit, basierend auf dem Gewicht des gebrannten Keramikmaterials, umfasst, und
wobei das gebrannte Keramikmaterial 0-10 Gew.-% Mullit, 0-2 Gew.-% Zirkon und 1-9 Gew.-% Quarz, basierend auf dem Gewicht des gebrannten Keramikmaterials, umfasst.

2. Fliese oder Platte nach Anspruch 1, wobei die Summe der Gewichtsprozentsätze von CaO + MgO in dem Bereich von 4,0-7,0 Gew.-%, oder 4,5-6,5 Gew.-%, basierend auf dem Gesamtgewicht des gebrannten Keramikmaterials, liegt.

3. Fliese oder Platte nach einem der Ansprüche 1 bis 2, wobei die Summe der Gewichtsprozentsätze von SiO₂ + Al₂O₃ + CaO + MgO in dem gebrannten Keramikmaterial mindestens 80,0 Gew.-%, oder mindestens 90,0 Gew.-%, bezüglich des Gesamtgewichts des gebrannten Keramikmaterials darstellt.

4. Fliese oder Platte nach einem der Ansprüche 1 bis 3, wobei das gebrannte Keramikmaterial eine chemische Zusammensetzung aufweist, umfassend
- 60,0-68,0 Gew.-% von SiO₂; und/oder
- 20,0-24,0 Gew.-% von Al₂O₃; und/oder
- 2,0-5,0 Gew.-% von CaO; und/oder
- 1,2-3,8 Gew.-% von MgO; und/oder
- 0,0-1,0 Gew.-% von ZrO₂; und/oder
- 0,0-0,6 Gew.-% von Fe₂O₃;
basierend auf dem Gesamtgewicht des gebrannten Keramikmaterials.

5. Fliese oder Platte nach einem der Ansprüche 1 bis 4, wobei das gebrannte Keramikmaterial eine chemische Zusammensetzung aufweist, weiter umfassend
- 1,0-7,0 Gew.-%, oder 2,0-6,0 Gew.-%, von Na₂O; und/oder
- 1,0-5,0 Gew.-%, oder 1,0-4,0 Gew.-%, von K₂O; und/oder
- 0,0-1,0 Gew.-%, oder 0,05-0,6 Gew.-%, von TiO₂;
basierend auf dem Gesamtgewicht des gebrannten Keramikmaterials.

6. Fliese oder Platte nach einem der Ansprüche 1 bis 5, wobei das gebrannte Keramikmaterial eine chemische Zusammensetzung aufweist, umfassend eine Kombination von Oxiden gemäß:
| | |
|---|---|
| SiO₂ | 60,0-68,0 Gew.-% |
| Al₂O₃ | 20,0-24,0 Gew.-% |
| CaO | 2,0-5,0 Gew.-% |
| MgO | 1,2-3,8 Gew.-% |
| ZrO₂ | 0,0-0,5 Gew.-% |
| Fe₂O₃ | 0,0-0,6 Gew.-% |
| TiO₂ | 0,0-0,6 Gew.-% |
| K₂O | 1,0-4,0 Gew.-% |
| Na₂O | 1,0-6,0 Gew.-% |
basierend auf dem Gesamtgewicht des gebrannten Keramikmaterials.

7. Fliese oder Platte nach einem der Ansprüche 1 bis 6, wobei das gebrannte Keramikmaterial eine chemische Zusammensetzung aufweist, umfassend
- 3,5-6,0 Gew.-% Na₂O, wie 4,0-5,5 Gew.-% Na₂O, basierend auf dem Gesamtgewicht des gebrannten Keramikmaterials; und/oder
- 2,2-4,0 Gew.-% von K₂O, basierend auf dem Gesamtgewicht des gebrannten Keramikmaterials.

8. Fliese oder Platte nach einem der Ansprüche 1 bis 7, wobei:
- die Summe der Menge von K₂O + Na₂O in der Zusammensetzung des gebrannten Keramikmaterials in dem Bereich von 5,5-11,0 Gew.-%, wie 6,0-9,0 Gew.-%, basierend auf dem Gesamtgewicht des gebrannten Keramikmaterials, liegt;
und/oder
- die Menge von B₂O₃, wenn vorhanden, in der Zusammensetzung des gebrannten Keramikmaterials weniger als 0,5 Gew.-%, wie 0-0,3 Gew.-%, basierend auf dem Gesamtgewicht des gebrannten Keramikmaterials, beträgt; und/oder
- die Menge von BaO, wenn vorhanden, in der Zusammensetzung des gebrannten Keramikmaterials weniger als 0,5 Gew.-%, wie 0-0,3 Gew.-%, basierend auf dem Gesamtgewicht des gebrannten Keramikmaterials, beträgt.

9. Fliese oder Platte nach einem der Ansprüche 1 bis 8, wobei das gebrannte Keramikmaterial 5-10 Gew.-% Albit als kristalline Phase, basierend auf dem Gesamtgewicht des gebrannten Keramikmaterials, umfasst.

10. Fliese oder Platte nach einem der Ansprüche 1 bis 9, wobei die Summe von sämtlichen kristallinen Phasen in dem gebrannten Keramikmaterial von 30-40 Gew.-%, basierend auf dem Gesamtgewicht des gebrannten Keramikmaterials, reicht.

11. Fliese oder Platte nach einem der Ansprüche 1 bis 9, wobei
- das gebrannte Keramikmaterial eine Länge von mindestens 2,4 m und eine Breite von mindestens 1,2 m aufweist; und/oder
- das gebrannte Keramikmaterial eine L* Koordinate von 75-85 aufweist; und/oder
- die Fliese oder Platte weiter eine Schicht oder Abscheidung von Porzellan, Glasur, Engobe, Tinte, Fritte und/oder Streugut umfasst.

12. Küchen- oder Waschtisch-Arbeitsplatte, Küchenspritzschutz, Duschwanne, Wand- oder Bodenabdeckung, Möbelverkleidung, Tischplatte, bewetterte Fassaden-Fliese, Herdplatte, Treppenschritt oder Kamin, hergestellt aus einer Fliese oder Platte nach einem der Ansprüche 1 bis 11.

13. Verfahren zur Herstellung einer Fliese oder Platte, wie in einem der Ansprüche 1 bis 11 definiert, wobei das Verfahren umfasst:
a) Herstellen diskreter Agglomerate von keramischen Ausgangsmaterialien;
b) Formen und Kompaktieren der Agglomerate, um ein geformtes und kompaktiertes Material mit einer Länge von mindestens 1,2 m und einer Breite von mindestens 0,6 m bereitzustellen;
b) Brennen des geformten und kompaktierten Materials mit einem Temperaturprofil mit einem Maximum zwischen 1100°C und 1190°C;
wobei die keramischen Ausgangsmaterialien von Schritt a) umfassen:
(i) 25-45 Gew.-% von Tonmaterialien, und
(ii) 55-75 Gew.-% von Nicht-Tonmaterialien
basierend auf dem Gesamtgewicht der keramischen Ausgangsmaterialien;
und worin die Nicht-Tonmaterialien (ii) umfassen:
- 50-65 Gew.-% Alkali-Feldspat,
- 2-10 Gew.-% Calciumsilikatmaterial, umfassend 9-50 Gew.-% CaO,
- 3-9 Gew.-% magnesiumhaltiges Material, umfassend 28-31,7 Gew.-% MgO,
- 0-1,5 Gew.-% zirkoniumhaltiges Material, umfassend 45-100 Gew.-% ZrO₂;
basierend auf dem Gesamtgewicht der keramischen Ausgangsmaterialien in a).

14. Verfahren nach Anspruch 13, worin die Nicht-Tonmaterialien (ii), basierend auf dem Gesamtgewicht der keramischen Ausgangsmaterialien, 0-3 Gew.-% Quarzmineral mit einem Quarzanteil von höher als 70 Gew.-% umfassen.

15. Verfahren nach einem der Ansprüche 13 bis 14, welches weiter einen Schritt der Bereitstellung einer Schicht, Abscheidung oder Vorläufers davon von einer Glasur, Pigment, Engobe, Streugut, Fritte, Tinte oder einer Kombination davon auf dem geformten und kompaktierten Material, erhalten nach Schritt B), umfasst.

## Revendications

1. Carreau ou plaque comprenant un matériau céramique cuit, dans lequel/laquelle le matériau céramique cuit a une longueur d'au moins 1,2 m et une largeur d'au moins 0,6 m, et a une composition chimique comprenant une combinaison d'oxydes conforme à :
| | |
|---|---|
| SiO₂ | 59,0 à 70,0 % en poids |
| Al₂O₃ | 19,0 à 25,0 % en poids |
| CaO | 1,7 à 5,8 % en poids |
| MgO | 1,2 à 5,6 % en poids |
| ZrO₂ | 0,0 à 1,9 % en poids |
| Fe₂O₃ | 0,0 à 1,0 % en poids |
sur la base du poids total du matériau céramique cuit ;
dans lequel/laquelle le matériau céramique cuit comprend 45 à 75 % en poids de phase vitreuse, 5 à 20 % en poids d'anorthite et 5 à 17 % en poids d'albite, sur la base du poids du matériau céramique cuit, et
dans lequel/laquelle le matériau céramique cuit comprend 0 à 10 % en poids de mullite, 0 à 2 % en poids de zircon et 1 à 9 % en poids de quartz, sur la base du poids du matériau céramique cuit.

2. Carreau ou plaque selon la revendication 1, dans lequel/laquelle la somme des pourcentages en poids de CaO + MgO se situe dans la plage de 4,0 à 7,0 % en poids, ou de 4,5 à 6,5 % en poids, sur la base du poids total du matériau céramique cuit.

3. Carreau ou plaque selon quelconque des revendications 1 à 2, dans lequel/laquelle la somme des pourcentages en poids de SiO₂ + Al₂O₃ + CaO + MgO dans le matériau céramique cuit représente au moins 80,0 % en poids, ou au moins 90,0 % en poids, du poids total du matériau céramique cuit.

4. Carreau ou plaque selon quelconque des revendications 1 à 3, dans lequel/laquelle le matériau céramique cuit a une composition chimique comprenant :
- 60,0 à 68,0 % en poids de SiO₂ ; et/ou
- 20,0 à 24,0 % en poids d'Al₂O₃ ; et/ou
- 2,0 à 5,0 % en poids de CaO ; et/ou
- 1,2 à 3,8 % en poids de MgO ; et/ou
- 0,0 à 1,0 % en poids de ZrO₂ ; et/ou
- 0,0 à 0,6 % en poids de Fe₂O₃ ;
sur la base du poids total du matériau céramique cuit.

5. Carreau ou plaque selon quelconque des revendications 1 à 4, dans lequel/laquelle le matériau céramique cuit a une composition chimique comprenant en outre :
- 1,0 à 7,0 % en poids, ou 2,0 à 6,0 % en poids, de Na₂O ; et/ou
- 1,0 à 5,0 % en poids, ou 1,0 à 4,0 % en poids, de K₂O ; et/ou
- 0,0 à 1,0 % en poids, ou 0,05 à 0,6 % en poids, de TiO₂ ; sur la base du poids total du matériau céramique cuit.

6. Carreau ou plaque selon quelconque des revendications 1 à 5, dans lequel/laquelle le matériau céramique cuit a une composition chimique comprenant une combinaison d'oxydes conforme à :
| | |
|---|---|
| SiO₂ | 60,0 à 68,0 % en poids |
| Al₂O₃ | 20,0 à 24,0 % en poids |
| CaO | 2,0 à 5,0 % en poids |
| MgO | 1,2 à 3,8 % en poids |
| ZrO₂ | 0,0 à 0,5 % en poids |
| Fe₂O₃ | 0,0 à 0,6 % en poids |
| TiO₂ | 0,0 à 0,6 % en poids |
| K₂O | 1,0 à 4,0 % en poids |
| Na₂O | 1,0 à 6,0 % en poids |
sur la base du poids total du matériau céramique cuit.

7. Carreau ou plaque selon quelconque des revendications 1 à 6, dans lequel/laquelle le matériau céramique cuit a une composition chimique comprenant :
- 3,5 à 6,0 % en poids de Na₂O, par exemple 4,0 à 5,5 % en poids de Na₂O, sur la base du poids total du matériau céramique cuit ; et/ou
- 2,2 à 4,0 % en poids de K₂O, sur la base du poids total du matériau céramique cuit.

8. Carreau ou plaque selon quelconque des revendications 1 à 7, dans lequel/laquelle :
- la somme de la quantité de K₂O + Na₂O dans la composition du matériau céramique cuit se situe dans la plage de 5,5 à 11,0 % en poids, par exemple de 6,0 à 9,0 % en poids, sur la base du poids total du matériau céramique cuit ; et/ou
- la quantité de B₂O₃, le cas échéant, dans la composition du matériau céramique cuit est inférieure à 0,5 % en poids, par exemple de 0 à 0,3 % en poids, sur la base du poids total du matériau céramique cuit ; et/ou
- la quantité de BaO, le cas échéant, dans la composition du matériau céramique cuit est inférieure à 0,5 % en poids, par exemple de 0 à 0,3 % en poids, sur la base du poids total du matériau céramique cuit.

9. Carreau ou plaque selon quelconque des revendications 1 à 8, dans lequel/laquelle le matériau céramique cuit comprend 5 à 10 % en poids d'albite en tant que phase cristalline, sur la base du poids total du matériau céramique cuit.

10. Carreau ou plaque selon quelconque des revendications 1 à 9, dans lequel/laquelle la somme de toutes les phases cristallines dans le matériau céramique cuit se situe dans une plage de 30 à 40 % en poids, sur la base du poids total du matériau céramique cuit.

11. Carreau ou plaque selon quelconque des revendications 1 à 10, dans lequel/laquelle :
- le matériau céramique cuit a une longueur d'au moins 2,4 m et une largeur d'au moins 1,2 m ; et/ou
- le matériau céramique cuit présente une coordonnée L* de 75 à 85 ; et/ou
- le carreau ou la plaque comprend en outre une couche ou un dépôt de porcelaine, de glaçure, d'engobe, d'encre, de fritte et/ou de sable.

12. Plan de travail de cuisine ou de salle de bain, crédence de cuisine, bac à douche, revêtement mural ou de sol, habillage de meuble, plateau de table, carreau de façade ventilée, plaque de cuisson, marche d'escalier ou cheminée réalisés à partir d'un carreau ou d'une plaque tel que défini dans quelconque des revendications 1 à 11.

13. Procédé de fabrication d'un carreau ou d'une plaque tel que défini dans quelconque des revendications 1 à 11, dans lequel le procédé comprend :
a) la préparation d'agglomérés discrets de matières premières céramiques ;
b) la mise en forme et le compactage des agglomérats pour fournir un matériau formé et compacté d'une longueur d'au moins 1,2 m et d'une largeur d'au moins 0,6 m ;
c) la cuisson du matériau formé et compacté avec un profil de température ayant un maximum compris entre 1 100 °C et 1 190 °C ;
dans lequel les matières premières céramiques de l'étape a) comprennent :
(i) 25 à 45 % en poids de matériaux argileux, et
(ii) 55 à 75 % en poids de matériaux non argileux,
sur la base du poids total desdites matières premières céramiques ;
et dans lequel les matériaux non argileux (ii) comprennent :
- 50 à 65 % en poids de feldspath alcalin,
- 2 à 10 % en poids d'un matériau de silicate de calcium contenant 9 à 50 % en poids de CaO,
- 3 à 9 % en poids d'un matériau contenant du magnésium, comprenant 28 à 31,7 % en poids de MgO,
- 0 à 1,5 % en poids d'un matériau contenant du zirconium, comprenant 45 à 100 % en poids de ZrO₂ ;
sur la base du poids total des matières premières céramiques de l'étape a).

14. Procédé selon la revendication 13, dans lequel les matériaux non argileux (ii) comprennent, sur la base du poids total des matières premières céramiques, 0 à 3 % en poids d'un minéral de quartz ayant une teneur en quartz supérieure à 70 % en poids.

15. Procédé selon quelconque des revendications 13 à 14, qui comprend en outre une étape de fourniture d'une couche, d'un dépôt ou d'un précurseur de ceux-ci, d'une glaçure, d'un pigment, d'un engobe, d'un granulé, d'une fritte, d'une encre ou d'une combinaison de ceux-ci sur le matériau formé et compacté obtenu après l'étape b).
